# EUROPEAN PATENT SPECIFICATION

(11) **EP 2 615 710 B1**
(45) Date of publication and mention of the grant of the patent: **25.03.2015**
(21) Application number: 13150206.4
(22) Date of filing: 04.01.2013
(51) Int. Cl.: H02J 3/00, H02J 3/32, H02J 3/38

(54) **Circuit and method for accumulating energy produced by renewable sources.**
Schaltung und Verfahren zur Ansammlung von durch erneuerbare Quellen erzeugter Energie
Circuit et procédé pour accumuler l'énergie produite par des sources renouvelables

(30) Priority: 10.01.2012 IT TO20120008
(43) Date of publication of application: 17.07.2013
(73) Proprietor: DG ECOENERGY S.a.s. di Diego Federico Giannuzzi & C., 73020 Melpignano (LE) (IT)
(72) Inventor: Giannuzzi, Gianluca, I-73020 MELPIGNANO (Lecce) (IT)
(74) Representative: Deambrogi, Edgardo

(56) References cited:
- EP-A2- 2 293 410
- GB-A- 2 462 913
- US-A1- 2003 047 209

## Description

The present invention relates to a circuit and to a method for accumulating electric energy produced by a renewable energy source.

Document EP 2 293 410 discloses a circuit reflected in the preamble of claim 1.

It is known that, in recent years, the population's increased energy demand has made the quantity of available resources more and more inadequate, and there is therefore the risk that these resources are not sufficient to satisfy the need for electric energy. It has therefore become more and more necessary to avoid wasted energy, optimizing the use of that which is currently present and orienting towards renewable energy sources.

This makes it possible, on the one hand, to save on the use of combustible raw materials and, on the other hand, to obtain an economic benefit owing to the installation of efficient technologies which make it possible to rationalize consumption, despite a greater initial cost for installing these technologies.

These requirements result in the need to behave in a manner intent on improving the quality of life for people, on account of a more informed and safe use of electric energy, directing them towards a low-consumption economy.

Energy saving is closely linked to so-called "green" technologies and to the planning of civil and industrial equipments ad hoc, along with the use of energy-saving and low-consumption components.

An energy saving is therefore made both by intervening in processes and in habits, encouraging models with consideration primarily to a responsible use of energy, and by using technologies which are able to produce this energy with the smallest waste possible or, even better, by means of self-production. The term "self-production of electric energy" means the production of electric energy by each user, by using technologies with a high energy saving which make it possible to utilize the energy made available by renewable sources, such as the sun and wind.

One sector evolving continuously is therefore that linked to the production of electric energy.

The use of these new technologies linked to renewable sources is encouraged through, for example, state incentives combined with specific ways of managing the energy produced.

In particular, in Italy there is an incentive policy for producing electric energy to which natural persons, corporate bodies, public organizations, blocks of housing units or offices are entitled. Owing to this incentive policy, the management calculates all the energy produced by the user's equipment and provides the producer with an incentive for the energy produced for a period of twenty years, the size of which varies depending on the type and on the power of the equipment.

Alongside the benefit relating to the incentive for producing electric energy is that which originates from the management of this energy. Indeed, the energy produced by user equipment, for example of the photovoltaic type, may be transferred to an electric energy distribution network in three ways:
- net metering: there is recognition, which is unfortunately not equal, between the energy acquired from the distribution network and that transferred to said network (counted by respective counters); the procedure is put into effect with an, almost always partial, refund by the management for the bills already paid;
- total transfer of the energy: the energy produced by the user is transferred and compensated for at higher prices compared to market prices, inasmuch as it derives from renewable energy sources;
- transfer of the surplus energy compared to that consumed: the amount of energy produced by the user but not consumed thereby instantaneously is transferred to the network.

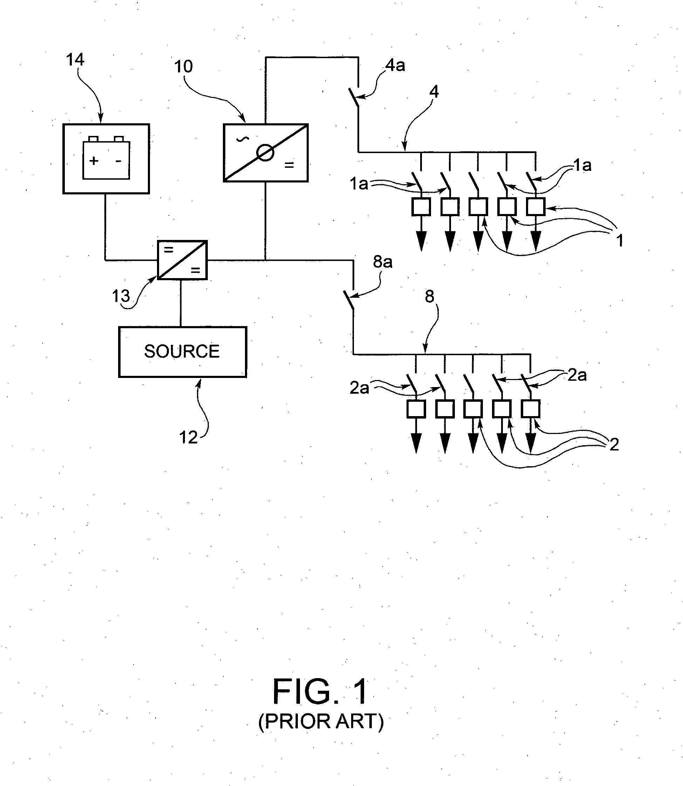

Regarding exclusively the self-consumption of the energy, before the introduction of the state incentives there were so called "stand-alone" systems of the type shown in the schematic circuit arrangement in Figure 1, in which all the energy produced was consumed and possibly complemented by a reserve supply.

Figure 1 shows a plurality of user equipments of the alternating current type 1 and a plurality of user equipments of the direct current type 2.

These user equipments 1, 2 are connected through respective switches 1a, 2a to respective user branches 4, 8.

The user branch 4 of the alternating current loads 1 is connected, by means of a switch 4a, to a stand-alone inverter 10 operating in isolation, arranged to transform the direct current coming from a renewable energy source 12, such as for example photovoltaic or wind equipment, into alternating current. The source 12 is connected to a charge regulator 13, which in turn is connected indeed to the stand-alone inverter 10 operating in isolation. The charge regulator 13 is also connected directly to the user equipments of the direct current type 2. Finally, an electric battery 14 having a voltage V_{b}, a minimum charge voltage Vₘᵢₙ and a maximum charge voltage V_{MAX} is connected to the charge regulator 13.

In the system shown in Figure 1, all of the energy produced by the source 12 is consumed by the user equipments 1, 2. If the source 12 is not able to supply, at a certain moment in time, a quantity of energy sufficient to correctly supply the user equipments, the charge regulator 13 takes the energy from the battery 14. Indeed, the user equipments 1, 2 have to be supplied, in a manner known per se, with currents and voltages having a predetermined nominal value, or else the correct operation and the integrity thereof is not ensured. If neither the source 12 nor the battery 14 are able to supply these nominal currents and voltages, the charge regulator 13 interrupts the energy supply.

For these types of systems, there is no provision of any state aid.

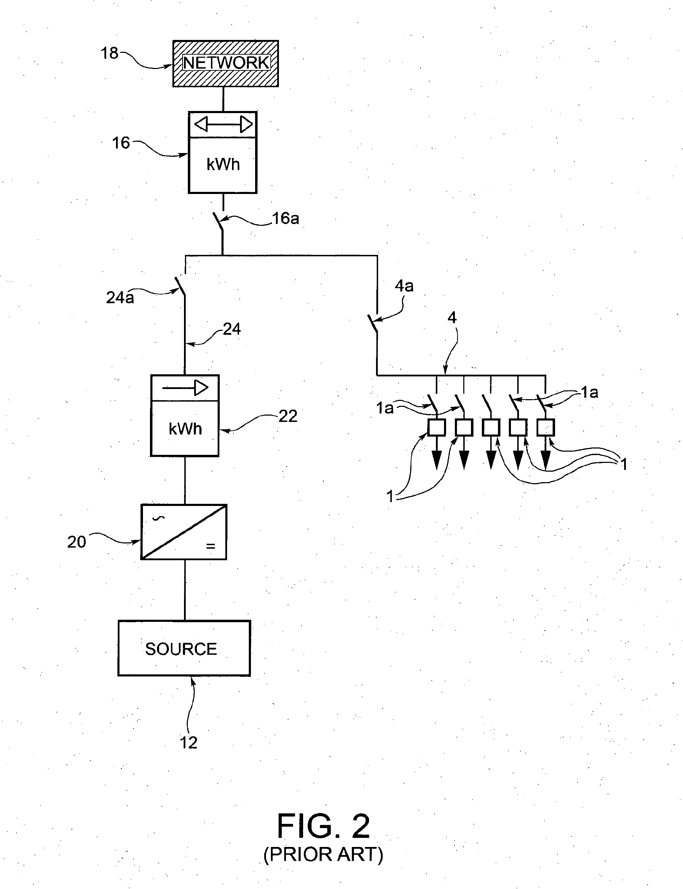

To be able to benefit from the state incentives, the equipments have to possess particular requirements, such as for example that relating to operation in parallel with the distribution network, and not in isolation, taking advantage of specific inverters called grid-connected inverters, as shown in the schematic circuit arrangement in Figure 2.

In this figure, user equipments of the alternating current type 1 are connected, through the respective user branch 4 and associated switch 4a, to an exchanged energy counter 16, by means of a switch 16a. The exchanged energy counter 16 is in turn connected to an electric energy distribution network 18, for example a BT or MT network, with three-phase or single-phase distribution, etc.

As an alternative or in addition to the user equipments of the alternating current type 1, there are the direct current user equipments, which are provided, on the user branch 4, with associated transformers arranged to transform the alternating current which flows in the user branch 4 into corresponding direct current. This is done since it is not possible to directly connect the direct current user equipments to the source 12 (as happened in the circuit in Figure 1), since otherwise the energy produced by the source 12 and used by these equipments would not be counted for the purposes of the state incentive, as described herein.

The source 12 is thus connected to an inverter 20 operating in parallel with the network, which is in turn connected to a produced energy counter 22 arranged exactly for counting all the energy produced by the source 12. The source 12, the parallel inverter 20 and the produced energy counter 22 are arranged on a supply branch 24 arranged to be connected, by means of a switch 24a, to the exchanged energy counter 16 and to the network 18.

The parallel inverter 20, in a manner known per se, allows for current to flow from the source 12 towards the produced energy counter 22 only when the distribution network 18 is connected to said source 12, i.e. when the switches 24a and 16a are closed and the distributor network is present.

The user branch 4 and the supply branch 24 are thus connected in parallel to the network 18.

The refund for the self-consumption of energy generated by the net metering depends on the energy exchanges, which, on average, are verified over a year. As already anticipated, the value of the energy produced and consumed is not equal; indeed, to achieve a total refund for the energy consumed, it would be necessary to produce surplus energy in a quantity greater than that consumed. This is because the surplus energy produced by the source 12 is consumed later by drawing it from the network 18, and this provides for the passage of energy in said network, generating costs for the managers of the networks. In addition, this passage of energy in the network 18 generates losses owing to the Joule effect along the distribution lines.

It is an object of the present invention, therefore, to propose a circuit and a method for accumulating energy produced by renewable energy sources, which makes it possible for the user to benefit from state incentives, respecting the relative requirements, to provide for their own energy sustenance using a minimal amount of energy coming from an external network and eliminating the losses owing to the passage along the distribution lines.

These and other objects are achieved by a circuit of which the features are defined in claim 1 and by a method of which the features are defined in claim 5.

Particular embodiments form the subject of the dependent claims, the content of which is to be understood to be an integral and integrating part of the present description.

Further features and advantages of the invention will become apparent from the following detailed description, which is provided purely by way of non-limiting example, with reference to the accompanying drawings, in which:
- Figures 1 and 2, already described, are schematic representations of circuits from the prior art;
- Figure 3 is a schematic representation of the circuit according to the present invention; and
- Figures 4 to 8 are schematic representations of the circuit shown in Figure 3 in different operating conditions.

In summary, the invention allows for the accumulation of the energy produced by renewable energy sources in equipments placed in parallel with the distribution network, by positioning the reserve battery (or alternatively any other energy accumulation device known per se) downstream of the produced energy counter, and thus on the side of the user equipments. The renewable energy source and the equipments can be connected in parallel with the distribution network.

In addition, the invention makes it possible to prevent the energy needed for charging the battery from being drawn from the distribution network, and thus from being counted in the bill, by providing that the battery is recharged only when there is a surplus in energy produced by the renewable source with respect to the energy which is consumed, i.e. when the difference between the power produced by the renewable source and the power consumed by the user equipments is greater than zero.

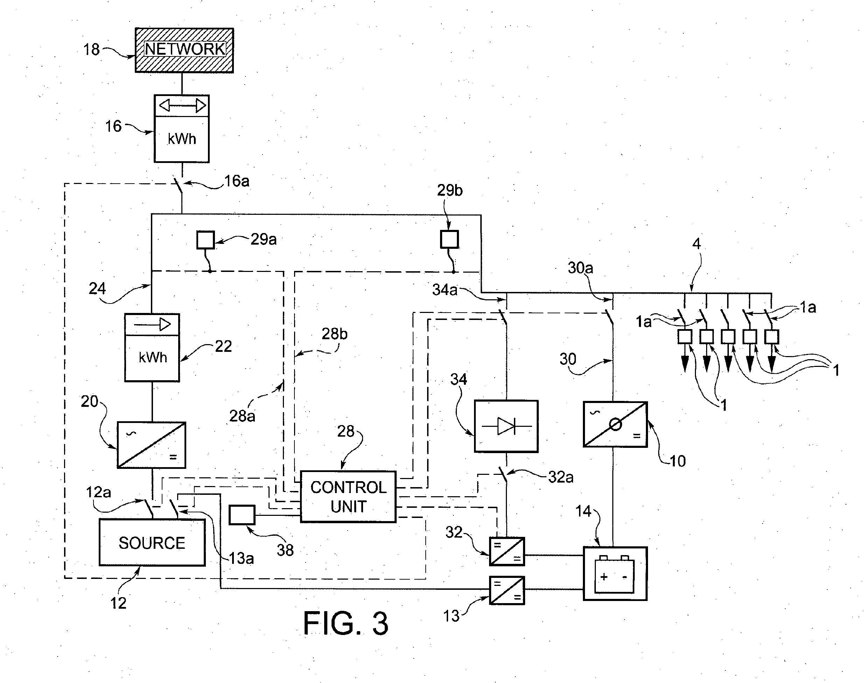

Figure 3 shows the single-wire electric diagram of the circuit of the present invention, in which components similar to those already described with reference to Figures 1 and 2 have the same reference signs.

The energy distribution network 18 is connected to the exchanged energy counter 16, which, by means of the associated switch 16a, may be connected in parallel to the user branch 4 and/or with the supply branch 24.

User equipments of the alternating current type 1 (or of the direct current type, not shown in the figure, with the aid of respective transformers) can be connected to the user branch 4, by means of respective switches 1a.

The user equipments 1 are arranged to thus be supplied with energy, coming from a renewable energy source 12 or from the distribution network 18 or from the battery 14, as described hereinbelow.

Present in the supply branch 24 is the renewable energy source 12, connected to an inverter 20 operating in parallel with the network, which is in turn connected to a produced energy counter 22. The source 12 may or may not produce energy, depending on the state of the ambient conditions on which it depends (for example, for photovoltaic sources, the presence/absence of sun, and, for wind sources, the presence/absence of wind, etc.).

The source 12 produces a determined quantity of produced apparent power S_{A} (which supplies through the supply branch 24) and the user equipments consume a determined quantity of used apparent power S_{B} (which draw through the user branch 4).

The user branch 4 and the supply branch 24 are connected to a control unit 28 by means of control branches 28a, 28b. Positioned on these control branches 28a, 28b are two respective network analysers 29a, 29b, arranged to respectively measure the produced apparent power S_{A} and the used apparent power S_{B}.

A sensor 38 is further connected to the control unit 28 and is arranged to indicate if the source 12 is available or if it is not available. By way of example, the sensor 38 sends the control unit 28 a binary signal, the value 0 of which indicates that the source 12 is not available and the value 1 of which indicates that the source is available. The sensor 38, for example in the case of a photovoltaic source, may be either a crepuscular sensor or a timepiece, and in the case of a wind source may be a wind detector, etc.

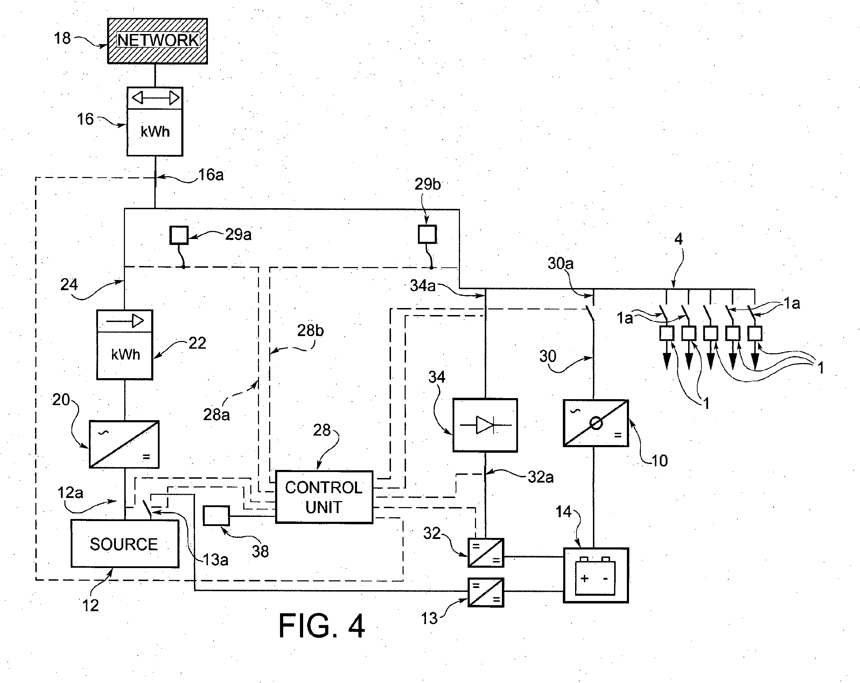

If the source is available, the control unit 28 closes a switch 12a associated with the source 12, and, in the opposite case, opens said switch, as will be described hereinbelow with reference to Figures 4-8.

The circuit according to the present invention also comprises a reserve branch 30 which can be connected, by means of a respective switch 30a, to the user branch 4. The reserve branch 30 comprises the battery 14 and the stand-alone inverter 10 operating in isolation. The reserve branch 30 is arranged to supply to the user equipments 1 reserve energy for their supply, in the case in which the source 12 or the network 18 is not available.

The battery 14 is connected in turn to a first charge regulator 32 and to a second charge regulator 13. In one variant of the invention, there are two switches arranged respectively between the battery and the first charge regulator 32 and the second charge regulator 13.

The second charge regulator 13 can be connected by means of a respective switch 13a to the source 12, to make it possible for the battery 14 to be charged as described hereinbelow.

The first charge regulator 32 can be connected by means of a switch 32a to a rectifier 34, which can be connected in turn by means of a switch 34a to the user branch 4. The first charge regulator 32 makes it possible to charge the battery 14 in conditions different to when the battery 14 is charged by means of the second charge regulator 13, as described hereinbelow.

The rectifier 34 makes it possible to rectify the current which flows from the user branch towards the first charge regulator 32.

The first charge regulator 32 is a regulator of the "slow charge" (reduced current) type. This type of regulator, coupled to the switch 32a which is opened and closed by the control unit 28 in the presence of surplus energy, as described hereinbelow, prevents the continuous separation/rearming of said switch 32a because of the sum total of the recharge power of the battery 14 together with the used power S_{B} used by the user equipments 1. Indeed, on the contrary, if the surplus energy is less than the charge energy, it would be possible to generate a loop in the switch 32a: this would be continuously closed in an instant in which there is a power surplus, open in the following instant in which the sum total of the power used by the user equipments 1 and the power used to charge the battery 14 exceeds the power surplus produced by the source, closed again in the next instant and so on.

In a manner known per se, the control unit 28 acquires from the first charge regulator 32 (connection represented by a dashed line which joins the control unit 28 to the first regulator 32) data indicative of the availability of the battery 14 (if it is available or not), and what the charge level thereof is (if it is completely charged, partially charged or flat). In particular, in a manner known per se, the first charge regulator 32 acquires these data from the battery 14, and uses them for setting the path of the charge current of the battery.

The control unit 28 further verifies the presence of surplus energy (S_{A}-S_{B}>0, i.e. the source 12 produces more energy than is used by the user equipments 1), using the data originating from the network analysers 29a and 29b, and the availability or unavailability of the source 12, by means of the sensor 38. If the battery 14 is not completely charged, and if surplus energy has been produced by the source 12, the control unit 28 provides for charging of the battery 14, as described hereinbelow, through the first charge regulator 32.

In the moment in which the battery 14 is charged, there is a consumption of energy, produced by the source 12, which is added to the energy already used at that moment in time by the user equipments. The charge current of the battery 14 which is set by the first charge regulator 32 is such that, if it is added to the current used at that moment by the user equipments, it is less than the current supplied by the source 12.

This solution involves the use of components which are already widely available on the market today, but may not exploit all of the available energy as a result of the possibility of activation of the loop described above and of the fact that the power needed to recharge the battery at a determined moment in time may be greater than the possible surplus power available at that same moment in time.

As a solution to this possible problem, as an alternative to the first charge regulator 32 and to the associated switch 32a, there is a specific charge regulator which, by communicating with the control unit 28, makes the surplus power S_{A}-S_{B} exclusively available for recharging the battery 14. This solution optimizes the accumulation of the energy produced to the maximum possible extent, rendering the work of the switch 32a superfluous, which could however be present together with the specific charge regulator, in one variant of the invention, with a control function.

The produced energy counter 22 counts all of the energy produced by the source 12, whereas the exchanged energy counter 16 counts the energy which is drawn from the network 18 when the used apparent power S_{B} is greater than the produced apparent power S_{A}. If the used apparent power S_{B} is less than the produced apparent power S_{A}, the exchanged energy counter 16 does not count anything for the purposes of calculating the sum total to pay out depending on the electric energy supply contract (bill).

The control unit 28 is thus arranged to verify the presence of surplus energy (S_{A}-S_{B}>0), using the data originating from the network analysers 29a and 29b, and the availability or unavailability of the source 12, by means of the sensor 38, and to control the switches 12a, 13a, 16a, 30a, 32a and 34a as described hereinbelow.

Figures 4 to 8 described hereinbelow each show a respective operating condition for the operation of the circuit shown in Figure 3.

Figure 4 shows the electric diagram of the circuit arrangement according to the invention in the case in which the battery 14 is available but not completely charged, and the source 12 and the network 18 are available.

The control unit 28, by means of the sensor 38, senses that the source is available and then closes the switches 12a and 16a to allow the flow of current in the supply branch 24, which would otherwise be prevented by the inverter operating in parallel with the network 20.

The control unit 28, by means of the first charge regulator 32, also senses that the battery 14 is available but not completely charged.

The control unit 28 then opens the switch 30a because the user equipments 1 have to be supplied by the source 12 through the user branch 4 and the supply branch 24, and not by the battery 14 through the reserve branch 30.

In this configuration, the source 12 then produces energy and uses it to supply the user equipments 1 by means of the supply branch 24 and the user branch 4.

The control unit 28 verifies the presence of surplus energy produced by the source 12 (by means of the data from the network analysers 29a and 29b) and, in a positive case, closes the switches 32a and 34a (or only the switch 34a if there is a specific charge regulator) such that the surplus energy, by means of the rectifier 34 and the first charge regulator 32, is used to charge the battery 14.

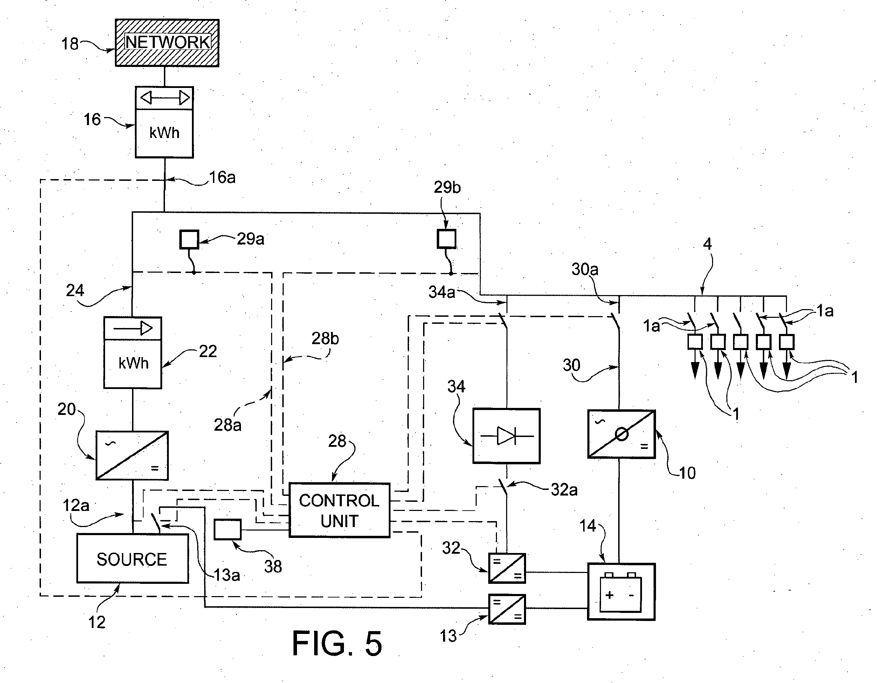

Figure 5 shows the electric diagram of the circuit arrangement in the case in which the battery 14 is available and completely charged (V_{b}=V_{MAX}), and the source 12 and the network 18 are available.

The control unit 28, by means of the sensor 38, senses that the source is available and then closes the switches 12a and 16a to allow the flow of current in the supply branch 24, which would otherwise be prevented by the inverter operating in parallel with the network 20.

The control unit 28, by means of the first charge regulator 32, also senses that the battery 14 is available and completely charged.

The control unit 28 then opens the switch 30 because the user equipments 1 have to be supplied by the source 12 through the user branch 4 and the supply branch 24, and not by the battery 14 through the reserve branch 30.

The control unit 28 finally opens the switches 32a and 34a because the battery 14 is already charged and does not have to be recharged.

In this configuration, the source 12 then produces energy and uses it to supply the user equipments 1 by means of the supply branch 24 and the user branch 4. The control unit 28, if it verifies the presence of surplus energy produced by the source 12 (by means of the data from the network analysers 29a and 29b), lets it flow towards the network 18.

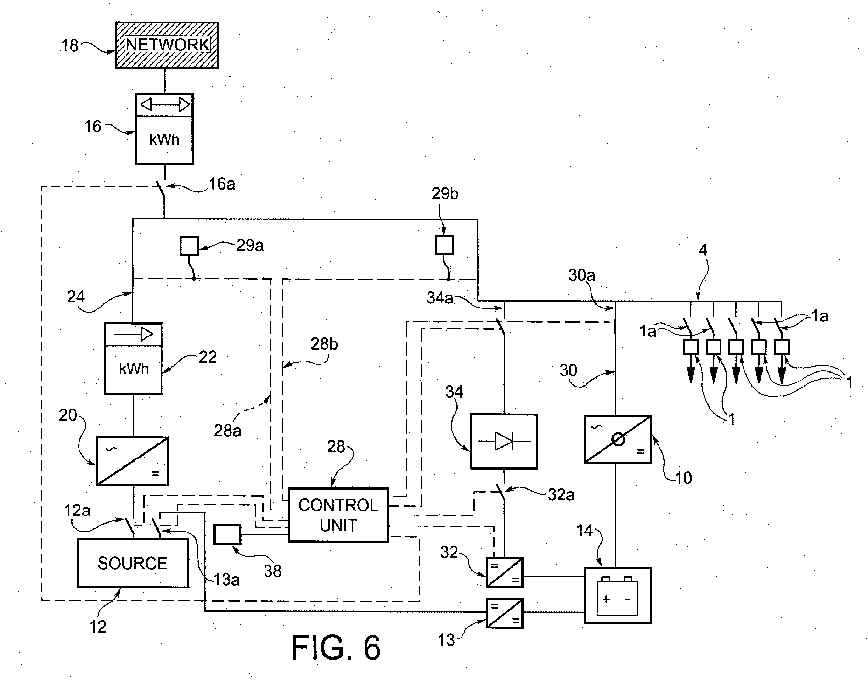

Figure 6 shows the electric diagram of the circuit arrangement in the case in which the battery 14 is available, the network 18 is available but the source 12 is not available.

The control unit 28, by means of the sensor 38, senses that the source is not available and then opens the switch 12a.

The control unit 28, by means of the first charge regulator 32, also senses that the battery 14 is available.

The control unit 28 then closes the switch 30 because the user equipments 1 have to be supplied by the battery 14 through the reserve branch 30, and at the same time opens the switch 16a to avoid a situation where the stand-alone inverter 10 is connected in parallel to the network 18.

The control unit 28 finally opens the switches 32a and 34a because the battery 14, in the case in which it is not completely charged, does not have to be recharged because the source 12 is not available.

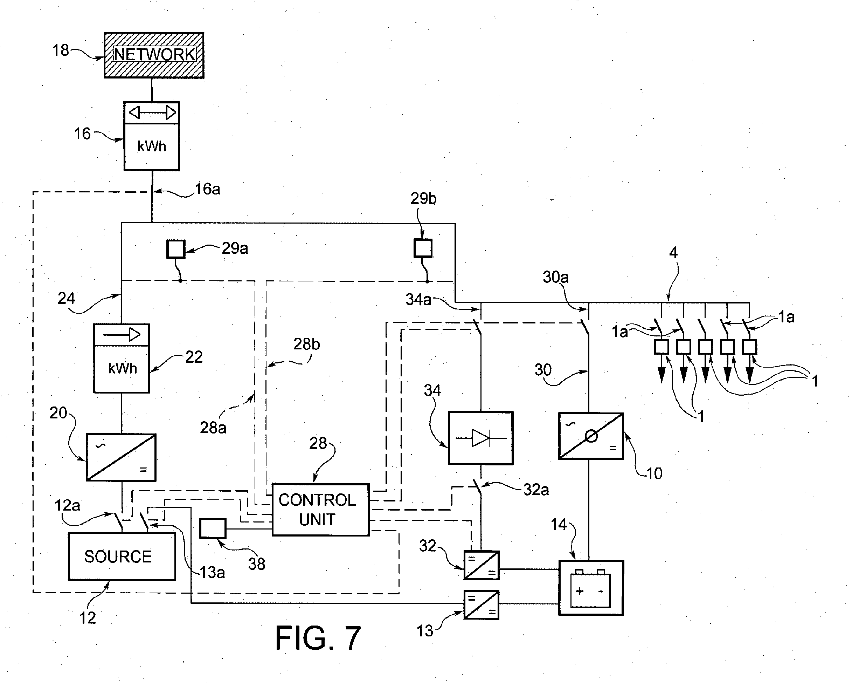

Figure 7 shows the electric diagram of the circuit arrangement in the case in which the source 12 and the battery 14 are not available, but the network 18 is available.

The control unit 28, by means of the sensor 38, senses that the source is not available and then opens the switch 12a and closes the switch 16a to allow the flow of current from the network 18 to the user branch 4 to supply the user equipments 1.

The control unit 28, by means of the first charge regulator 32, also senses that the battery 14 is not available.

The control unit 28 then opens the switches 32a and 34a because the source 12 is not available and it is not desired to recharge the battery 14 using energy drawn from the network 18.

The control unit 28 finally opens the switch 30a because the battery 14 is not available and then cannot be used to supply the user equipments 1.

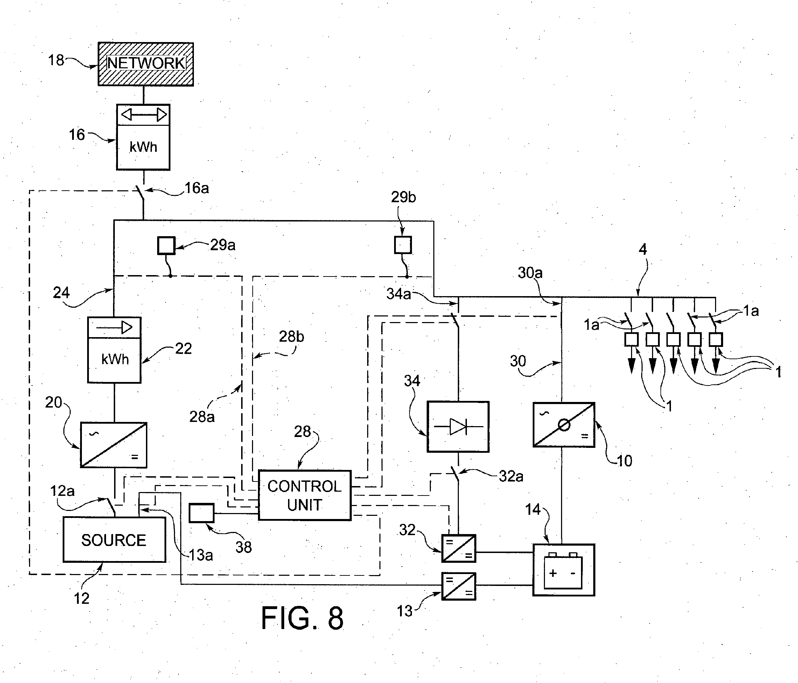

Figure 8 shows the electric diagram of the circuit arrangement in the case in which the source 12 and the battery 14 are available, but the network 18 is not available owing, for example, to a defect or maintenance.

The control unit 28, by means of the sensor 38, senses that the source is available, and, by means of the first charge regulator 32, senses that the battery 14 is available.

In a manner known per se, the control unit 28 acquires from the network 18 the information that said network is not available, and therefore, in the knowledge that it is necessary to supply the user loads 1 by means of the battery 14, opens the switch 16a to prevent a dangerous flow of current from the user branch 4 (supplied by the battery 14 and by the stand-alone inverter 20) towards the inverter operating in parallel 20.

The control unit 28 opens the switch 12a so as not to keep the parallel inverter 20 uselessly live.

The control unit 28 then closes the switches 13a and 30a to allow the flow of current from the source 12 to the battery 14, to charge it through the second charge regulator 13, and from the battery 14 to the user equipments 1 through the reserve branch 30.

In Figures 4-7, the battery 14 is always recharged through of the first charge regulator 32 and never through the second charge regulator 13, as described here. This happens because it is desirable for all the energy produced by the source 12 to be counted by the produced energy counter 22, so as to benefit from the incentives linked to the production of this energy. Therefore, if in the configurations shown in Figures 4-7 use were made, for recharging the battery 14, of the branch associated with the second regulator 13, there would not be the incentive associated with the corresponding recharge energy.

The control unit 28 finally opens the switches 32a and 34a because it is not possible to charge the battery 14 through the rectifier 34. Indeed, since the switch 16 is open, the inverter 20 prevents the flow of current through the supply branch 24 and the user branch 4 towards the rectifier 34.

In this configuration, the source 12 produces energy and uses it to charge the battery 14, which in turn supplies the user equipments 1 through of the reserve branch 30.

Obviously, without affecting the principle of the invention, the embodiments and the constructional details may be greatly modified with respect to that described and illustrated purely by way of non-limiting example, without thereby departing from the scope of the invention as defined in the accompanying claims.

## Claims

1. Circuit for accumulating electric energy produced by a renewable energy source (12), said circuit being arranged to be connected to an energy distribution network (18), the circuit comprising:
- a user branch (4), comprising user equipments (1) arranged to be supplied with energy, arranged to be connected in parallel to the network (18);
- a supply branch (24), arranged to be connected in parallel to the network (18), including a renewable energy source (12) and an inverter (20) operating in parallel with the network (18), connected to the source (12);
- a control unit (28) connected to said supply branch (24) and user branch (4) and arranged to manage the supply of energy to the user equipments (1);
- measuring means (29a, 29b) connected to the control unit (28) and arranged to respectively measure the produced apparent power (S_{A}) produced by the source (12) and the used apparent power (S_{B}) used by the user equipments (1);
- a sensor (38) connected to the control unit (28) and arranged to indicate whether the source (12) is available or not;
- a reserve branch (30), arranged to be connected to the user branch (4), comprising an energy accumulation device (14), said reserve branch (30) being arranged to supply to the user equipments (1) reserve energy for their supply;
- a first charge regulator (32) connected to the energy accumulation device (14) and arranged to be connected to the user branch (4) for charging the energy accumulation device (14);
the circuit being **characterized in that** the reserve branch (30) further comprises a stand-alone inverter (10) operating in isolation.

2. Circuit according to claim 1, further comprising a second charge regulator (13) connected to the energy accumulation device (14) and arranged to be connected to the source (12) for charging the energy accumulation device (14).

3. Circuit according to claim 1 or 2, further comprising an exchanged energy counter (16), connected between the network (18) and the supply branch (24) and user branch (4), said exchanged energy counter (16) being arranged for counting the energy taken from the network (18).

4. Circuit according to any of the preceding claims, further comprising a produced energy counter (22) connected between the inverter (20) operating in parallel with the network (18) and the network (18), arranged for counting the energy produced by the source (12).

5. Circuit according to any of the preceding claims, further comprising a rectifier (34) placed between the first charge regulator (32) and the user branch (4), arranged to rectify the current which flows from the user branch (4) towards the first charge regulator (32).

6. Method for accumulating electric energy produced by a renewable energy source comprising the steps of:
- providing a circuit according to any of the preceding claims;
- acquiring from the sensor (38) data indicative of the availability of the source (12);
- acquiring from the first charge regulator (32) data indicative of the availability and the charge level of the energy accumulation device (14);
- measuring the produced apparent power (S_{A}) and the used apparent power (S_{B});
- providing energy to the user equipments (1) from the source (12), or the network (18) or the energy accumulation device (14) based on the availability of the source (12) and/or the availability of the energy accumulation device (14);
- charging the energy accumulation device (14), if the energy accumulation device (14) is not completely charged, if the difference between the produced apparent power (S_{A}) and the used apparent power (S_{B}) is greater than zero and if the source (12) is available.

7. Method according to claim 6, wherein the step of providing energy to the user equipments (1) comprises the steps of:
- providing energy from the source (12) through the supply branch (24) and user branch (4) if the source is available;
- providing energy from the energy accumulation device (14) through the reserve branch (30) if the source is not available and the energy accumulation device (14) is at least partially charged;
- providing energy from the network (18) through the user branch (4) if the source (12) and the energy accumulation device (14) are not available.

8. Method according to claim 6, wherein the step of charging the energy accumulation device (14) comprises the steps of:
- charging the energy accumulation device (14) through the first charge regulator (32) if the network (18) is available;
- charging the energy accumulation device (14) through the second charge regulator (13) if the network (18) is not available.

## Patentansprüche

1. Schaltungsanordnung zur Speicherung von elektrischer Energie, die durch eine erneuerbare Energiequelle (12) erzeugt wird, wobei die Schaltungsanordnung eingerichtet ist, um mit einem Energieverteilungsnetzwerk (18) verschaltet zu werden, wobei die Schaltungsanordnung umfasst:
- eine Benutzer-Abzweigung (4), umfassend Benutzer-Eimichtungen (1), die eingerichtet sind, um mit Energie versorgt zu werden und eingerichtet sind, um parallel zu dem Netzwerk (18) geschaltet zu werden;
- eine Versorgungs-Abzweigung (24), eingerichtet, um parallel zu dem Netzwerk (18) geschaltet zu werden, enthaltend eine erneuerbare Energiequelle (12) und einen parallel zu dem Netzwerk (18) betriebenen Inverter (20), der mit der Quelle (12) verschaltet ist;
- eine Steuereinheit (28), die mit der Versorgungs-Abzweigung (24) und der Benutzer-Abzweigung (4) verschaltet ist und eingerichtet ist, um die Versorgung von Energie zu den Benutzer-Einrichtungen (1) zu leiten;
- Messmittel (29a, 29b), die mit der Steuereinheit (28) verschaltet und eingerichtet sind, um jeweils die von der Quelle (12) erzeugte Scheinleistung (S_{A}) und die von dem Benutzer-Einrichtungen (1) verbrauchte Scheinleistung (S_{B}) jeweils zu messen;
- einen Sensor (38), der mit der Steuereinheit (28) verschaltet und eingerichtet ist, um anzuzeigen, ob die Quelle (12) verfügbar ist oder nicht;
- einen Reserve-Abzweigung (30), eingerichtet um mit der Benutzer-Abzweigung (4) verschaltet zu werden, umfassend ein Energie speicherndes Gerät (14), wobei die Reserve-Abzweigung (30) eingerichtet ist, um die Benutzer-Einrichtung (1) mit Reserve-Energie zu deren Versorgung zu versorgen;
- einen ersten Laderegler (32), der mit dem Energie speichernden Gerät (14) verschaltet und eingerichtet ist, um mit der Benutzer-Abzweigung (4) verschaltet zu werden, um das Energie speichernde Gerät (14) zu laden;
die Schaltungsanordnung ist **dadurch gekennzeichnet, dass** die Reserve-Abzweigung (30) des Weiteren einen isoliert betriebenen eigenständigen Inverter (10) umfasst.

2. Schaltungsanordnung nach Anspruch 1, weiter umfassend einen zweiten Lade-Regler (13), der mit dem Energie speichernden Gerät (14) verschaltet und eingerichtet ist, um mit der Quelle (12) zur Ladung des Energie speichernden Gerätes (14) verbunden zu werden.

3. Schaltungsanordnung nach Anspruch 1 oder 2, weiter umfassend einen Zähler (16) für ausgetauschte Energie, der zwischen dem Netzwerk (18) und der Versorgungs-Abzweigung (24) sowie der Benutzer-Abzweigung (4) verschaltet ist, wobei der Zähler (16) ausgetauschter Energie eingerichtet ist zum Zählen der von dem Netzwerk (18) aufgenommenen Energie.

4. Schaltungsanordnung nach irgendeinem der vorhergehenden Ansprüche, weiter umfassend einen Zähler (22) für erzeugte Energie, der zwischen dem parallel zu dem Netzwerk (18) arbeitenden Inverter (20) und dem Netzwerk (18) verschaltet ist und eingerichtet ist, um die von der Quelle (12) erzeugte Energie zu zählen.

5. Schaltungsanordnung nach irgendeinem der vorhergehenden Ansprüche, weiter umfassend einen Gleichrichter (34), der zwischen dem ersten Lade-Regler (32) und der Benutzer-Abzweigung (4) angeordnet und eingerichtet ist, um Strom gleichzurichten, der von der Benutzer-Abzweigung (4) zu dem erste Lade-Regler (32) fließt.

6. Verfahren zur Speicherung von durch eine erneuerbare Energiequelle erzeugter elektrischer Energie, umfassend die Schritte:
- Bereitstellen einer Schaltungsanordnung entsprechend irgendeinem der vorhergehenden Ansprüche;
- Erfassen von Daten von dem Sensor (38), die die Verfügbarkeit der Quelle (12) anzeigen;
- Erfassen von Daten von dem ersten Lade-Regler (32), die die Verfügbarkeit und das Lade-Level des Energie speichernden Gerätes (14) anzeigen;
- Messen der erzeugten Scheinleistung (S_{A}) und der verbrauchten Scheinleistung (S_{B});
- Bereitstellen von Energie an die Benutzer-Einrichtungen (1) aus der Quelle (12) oder dem Netzwerk (18) oder dem Energie speichernden Gerät (14) basierend auf der Verfügbarkeit der Quelle (12) und/oder der Verfügbarkeit des Energie speichernden Gerätes (14);
- Laden des Energie speichernden Gerätes (14), wenn das Energie speichernde Gerät (14) nicht vollständig geladen ist, wenn die Abweichung zwischen der produzierten Scheinleistung (S_{A}) und der verbrauchten Scheinleistung (S_{B}) größer als Null und die Quelle (12) verfügbar ist.

7. Verfahren nach Anspruch 6, wobei der Schritt der Bereitstellung von Energie an die Benutzer-Einrichtungen (1) die Schritte umfasst:
- Bereitstellen von Energie von der Quelle (12) durch die Versorgungs-Abzweigung (24) und die Benutzer-Abzweigung (4), wenn die Quelle verfügbar ist;
- Bereitstellung von Energie von dem Energie speichernden Gerät (14) durch die Reserve-Abzweigung (30), wenn die Quelle nicht verfügbar ist und das Energie speichernde Gerät (14) zumindest teilweise geladen ist;
- Bereitstellung von Energie von dem Netzwerk (18) durch die Nutzer-Abzweigung (4), wenn die Quelle (12) und das Energie speichernde Gerät (14) nicht verfügbar sind.

8. Verfahren nach Anspruch 6, wobei der Schritt des Ladens des Energie speichernden Gerätes (14) folgende Schritte umfasst:
- Laden des Energie speichernden Gerätes (14) durch den ersten Lade-Regler (32), wenn das Netzwerk (18) verfügbar ist;
- Laden des Energie speichernden Gerätes (14) durch den zweiten Lade-Regler (13), wenn das Netzwerk (18) nicht verfügbar ist.

## Revendications

1. Circuit pour accumuler l'énergie électrique produite par une source d'énergie renouvelable (12), ledit circuit étant agencé pour être connecté à un réseau de distribution d'énergie (18), le circuit comprenant :
- une branche d'utilisateur (4) comprenant des appareils d'utilisateur (1) agencés pour recevoir de l'énergie, agencés pour être connectés en parallèle sur le réseau (18) ;
- une branche d'alimentation (24) agencée pour être connectée en parallèle sur le réseau (18), comprenant une source d'énergie renouvelable (12) et un onduleur (20) fonctionnant parallèlement au réseau (18), connecté à la source (12) ;
- une unité de commande (28) connectée à ladite branche d'alimentation (24) et à ladite branche d'utilisateur (4) et agencée pour gérer la fourniture d'énergie aux appareils d'utilisateur (1) ;
- un moyen de mesure (29a, 29b) connecté à l'unité de commande (28) et agencé pour mesurer respectivement la puissance apparente produite (S_{A}) produite par la source (12) et la puissance apparente utilisée (S_{B}) utilisée par les appareils d'utilisateur (1) ;
- un capteur (38) connecté à l'unité de commande (28) et agencé pour indiquer si la source (12) est disponible ou non ;
- une branche de réserve (30) agencée pour être connectée à la branche d'utilisateur (4), comprenant un dispositif d'accumulation d'énergie (14), ladite branche de réserve (30) étant agencée pour fournir aux appareils d'utilisateur (1) une énergie de réserve pour leur alimentation ;
- un premier régulateur de charge (32) connecté au dispositif d'accumulation d'énergie (14) et agencé pour être connecté à la branche d'utilisateur (4) pour charger le dispositif d'accumulation d'énergie (14) ;
le circuit étant **caractérisé en ce que** la branche de réserve (30) comprend en outre un onduleur autonome (10) fonctionnant en isolement.

2. Circuit selon la revendication 1, comprenant en outre un deuxième régulateur de charge (13) connecté au dispositif d'accumulation d'énergie (14) et agencé pour être connecté à la source (12) pour charger le dispositif d'accumulation d'énergie (14).

3. Circuit selon la revendication 1 ou 2, comprenant en outre un compteur d'énergie échangée (16), connecté entre le réseau (18) et la branche d'alimentation (24) et la branche d'utilisateur (4), ledit compteur d'énergie échangée (16) étant agencé pour compter l'énergie prise au réseau (18).

4. Circuit selon l'une quelconque des revendications précédentes, comprenant en outre un compteur d'énergie produite (22), connecté entre l'onduleur (20) fonctionnant parallèlement au réseau (18) et le réseau (18), agencé pour compter l'énergie produite par la source (12).

5. Circuit selon l'une quelconque des revendications précédentes, comprenant en outre un redresseur (34) placé entre le premier régulateur de charge (32) et la branche d'utilisateur (4), agencé pour redresser le courant qui circule de la branche d'utilisateur (4) vers le premier régulateur de charge (32).

6. Procédé pour accumuler l'énergie électrique produite par une source d'énergie renouvelable comprenant les étapes suivantes :
- fournir un circuit selon l'une quelconque des revendications précédentes ;
- acquérir à partir du capteur (38) des données indiquant la disponibilité de la source (12) ;
- acquérir à partir du premier régulateur de charge (32) des données indiquant la disponibilité et le niveau de charge du dispositif d'accumulation d'énergie (14) ;
- mesurer la puissance apparente produite (S_{A}) et la puissance apparente utilisée (S_{B}) ;
- fournir de l'énergie aux appareils d'utilisateur (1) depuis la source (12), ou le réseau (18) ou le dispositif d'accumulation d'énergie (14) en se basant sur la disponibilité de la source (12) et/ou la disponibilité du dispositif d'accumulation d'énergie (14) ;
- charger le dispositif d'accumulation d'énergie (14) si le dispositif d'accumulation d'énergie (14) n'est pas complètement chargé, si la différence entre la puissance apparente produite (S_{A}) et la puissance apparente utilisée (S_{B}) est supérieure à zéro et si la source (12) est disponible.

7. Procédé selon la revendication 6, dans lequel l'étape de fourniture d'énergie aux appareils d'utilisateur (1) comprend les étapes suivantes :
- fournir de l'énergie à partir de la source (12) à travers la branche d'alimentation (24) et la branche d'utilisateur (4) si la source est disponible ;
- fournir de l'énergie à partir du dispositif d'accumulation d'énergie (14) à travers la branche de réserve (30) si la source n'est pas disponible et si le dispositif d'accumulation d'énergie (14) est au moins partiellement chargé ;
- fournir de l'énergie à partir du réseau (18) à travers la branche d'utilisateur (4) si la source (12) et le dispositif d'accumulation d'énergie (14) ne sont pas disponibles.

8. Procédé selon la revendication 6, dans lequel l'étape de charge du dispositif d'accumulation d'énergie (14) comprend les étapes suivantes :
- charger le dispositif d'accumulation d'énergie (14) à travers le premier régulateur de charge (32) si le réseau (18) est disponible ;
- charger le dispositif d'accumulation d'énergie (14) à travers le deuxième régulateur de charge (13) si le réseau (18) n'est pas disponible.
